# EUROPEAN PATENT APPLICATION

(11) **EP 3 603 885 A1**
(43) Date of publication of application: **05.02.2020**
(21) Application number: 18727336.2
(22) Date of filing: 20.03.2018
(51) Int. Cl.: B24B 39/00, B23P 9/04, B24B 1/04

(54) **ULTRASONIC VIBRATION-ASSISTED BALL BURNISHING TOOL**

(30) Priority: 21.03.2017 ES 201730385
(71) Applicant: Universitat Politècnica De Catalunya, 08034 Barcelona (ES)
(72) Inventor: JERÉZ MESA, Ramón, 08014 Barcelona (ES); GÓMEZ GRAS, Giovanni, 08208 Sabadell (ES); TRAVIESO RODRIGUEZ, José Antonio, 08019 Barcelona (ES); LLUMÀ I FUENTES, Jordi, 08901 L'Hospitalet de Llobregat (ES)
(74) Representative: Juncosa Miró, Jaime
(86) International application number: PCT/ES2018/070209
(87) International publication number: WO 2018/172584

(57) **Abstract**

The ultrasonic vibration-assisted ball burnishing tool comprises a burnishing head (1) including a burnishing ball (25) supported on a head body (10) and an ultrasonic vibration transmission unit (2) including one or more piezoelectric ceramic bodies (31) housed in a casing (30) having a distal end fixed to a proximal end of the head body (10). A plurality of support spheres (26) inserted in an annular groove (11) formed on a surface perpendicular to the central axis (E) of the head body (10) are interposed between the distal end of the head body (10) and the burnishing ball (25). The ultrasonic vibration transmission unit (2), the head body (10) and the burnishing ball (25) are aligned along a central axis (E).

## Description

### Field of the Art

The present invention relates to an ultrasonic vibration-assisted ball burnishing tool that can be used in a machine tool to provide a burnished finish by plastic deformation to machined metal workpieces.

### Background of the Invention

Document WO 0020170 A1 discloses a ball burnishing tool comprising a base support provided for being fixed to a tool holder element of a machine tool, a burnishing head including a head body which is guided such that it can slide along a central axis with respect to the base support, and an elastic element interposed under compression between the head body and the base support for elastically applying a force to the head body in a direction opposite the base support. The burnishing head includes a burnishing ball supported on a seat of the head body and retained by a retaining sleeve fixed to the head body. A lubricating device injects a lubrication fluid from an external lubricant supply source to the seat of the head body to provide a hydrostatic bearing between the seat and the burnishing ball.

One drawback of this burnishing tool described in the cited document WO 0020170 A1 is that the elastic element must have a very high elastic constant so that the force transmitted by the elastic element to the head body and to the burnishing ball is enough to perform the burnishing operation. Another drawback is the need to have a lubricating device and an external lubricant supply source to provide the hydrostatic bearing between the seat and the burnishing ball.

Document DE 102012010218 A1 describes a vibration-assisted ball burnishing tool comprising an ultrasonic vibration transmission unit including one or more piezoelectric ceramic bodies, a burnishing head including a burnishing ball supported on a seat of a head body fixed to the ultrasonic vibration transmission unit, and a coil spring mounted parallel to the vibration transmission unit, such that the resonance frequency of the ultrasonic vibration transmission unit can be varied by changing the rigidity of the elastic element. Nevertheless, this document neither describes nor suggests means for applying force to the burnishing ball in a regulated manner or means for reducing friction between the seat of the head body and the burnishing ball.

### Disclosure of the Invention

The present invention contributes to mitigating the foregoing and other drawbacks by providing an ultrasonic vibration-assisted ball burnishing tool essentially comprising a burnishing head including a burnishing ball supported on a head body and an ultrasonic vibration transmission unit including one or more piezoelectric ceramic bodies, wherein the head body is fixed to the ultrasonic vibration transmission unit such that the ultrasonic vibration transmission unit, the head body and the burnishing ball are aligned along a central axis.

The one or more piezoelectric ceramic bodies of the vibration transmission unit are housed in a casing having a proximal end and a distal end. The head body has a proximal end fixed to the distal end of the casing of the vibration transmission unit and a distal end provided with an annular groove formed on a surface perpendicular to the central axis. A plurality of support spheres in contact with both are interposed between the distal end of the head body and the burnishing ball, and the support spheres are inserted in the annular groove of the head body.

Thus, the support spheres minimize friction between the head body and the burnishing ball without having to have a lubricating device injecting a lubrication fluid from an external lubricant supply source.

The annular groove of the head body preferably has a semicircular section with a radius equivalent to a radius of the support spheres, although other section shapes are possible, such as a V-shaped section, for example. The burnishing ball is retained at the distal end of the head body by a retaining sleeve fixed to the head body, for example, by means of a threaded attachment.

Preferably, the casing of the vibration transmission unit has fixed thereto an outer connector, and this outer connector is connected with the one or more piezoelectric ceramic bodies through a passage opening. By means of the connector, the one or more piezoelectric ceramic bodies can be connected to an external electric field generator by means of a connection cable. During operation, the external electric field generator causes the excitation of the one or more piezoelectric ceramic bodies to produce an ultrasonic vibration.

In a preferred embodiment, the one or more piezoelectric ceramic bodies have an ultrasonic resonance frequency of 35 to 45 kHz and transmit an ultrasonic percussion frequency of 20 kHz or higher to the burnishing ball.

In one embodiment, a circular connecting plate extends from the proximal end of the head body, said plate having a perimetral edge attached to a cylindrical ring in which there are a plurality of fixing holes arranged radially with respect to the central axis. These fixing holes are aligned with corresponding fixing holes of the casing of the vibration transmission unit, and fixing screws are installed through the respective fixing holes for attaching the head body to the casing of the vibration transmission unit.

The mentioned connecting plate preferably has thickness reductions produced by two or more annular grooves concentric with the central axis formed on opposite sides of the connecting plate, and the one or more piezoelectric ceramic bodies of the vibration transmission unit are in contact with the proximal end of the head body.

In one embodiment, the burnishing tool further comprises a force regulating unit including a base support provided for being fixed to a tool holder element of a machine tool, an oscillating support which is guided such that it can slide along the central axis with respect to the base support, and an elastic element interposed under compression between the oscillating support and the base support for elastically applying a force to the oscillating support in a direction opposite the base support. A distal end of the oscillating support opposite the base support is fixed to the proximal end of the casing of the ultrasonic vibration transmission unit.

Preferably, the oscillating support has a rod coaxial with the central axis and the elastic element is a coil spring arranged around the rod. For example, the oscillating support has a cylindrical portion and a step between the cylindrical portion and the rod, and a distal end of the coil spring is supported on this step. The base support has an axial opening in which the rod is slidingly inserted and guided and a support surface around the axial opening where a proximal end of the coil spring is supported. Furthermore, the base support has a cylindrical tubular wall surrounding the coil spring and part of the cylindrical portion of the oscillating support and the cylindrical portion of the oscillating support is slidingly inserted and guided in the cylindrical tubular wall.

A portion of the rod protrudes from one side of the base support opposite the coil spring and a stop element is fixed to this protruding portion of the rod. The stop element has a dimension greater than the axial opening of the base support, such that the stop element limits the sliding movement of the oscillating support with respect to the base support in a direction away from the base support.

The oscillating support preferably has a perimetral flange extending radially from the distal end opposite the base support, and the perimetral flange has fixing holes parallel to the central axis and aligned with corresponding fixing holes existing at the proximal end of the casing of the vibration transmission unit. Fixing screws attaching the oscillating support to the casing of the vibration transmission unit are installed through the respective fixing holes.

### Brief Description of the Drawings

The foregoing and other features and advantages will be better understood based on the following detailed description of a merely illustrative and non-limiting embodiment with reference to the attached drawings, in which:
Figure 1 is a perspective view of an ultrasonic vibration-assisted ball burnishing tool according to an embodiment of the present invention;
Figure 2 is a cross-section view of the burnishing tool of Figure 1 taken along a plane containing a central axis thereof;
Figure 3 is a cross-section view of a burnishing head which is part of the burnishing tool, taken along a plane containing a central axis thereof;
Figure 4 is an exploded, cross-section view of the burnishing head of Figure 3;
Figure 5 is a partially sectioned partial perspective view of components of the burnishing head;
Figure 6 is a cross-section view of an ultrasonic vibration transmission unit which is part of the burnishing tool, taken along a plane containing a central axis thereof;
Figure 7 is a cross-section view of a force regulating unit which is part of the burnishing tool, taken along a plane containing a central axis thereof; and
Figure 8 is an exploded, cross-section view of the force regulating unit of Figure 7.

### Detailed Description of an Embodiment

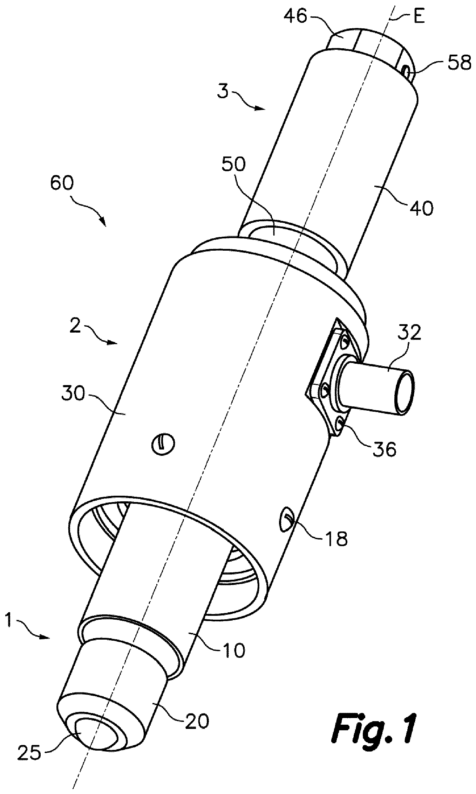

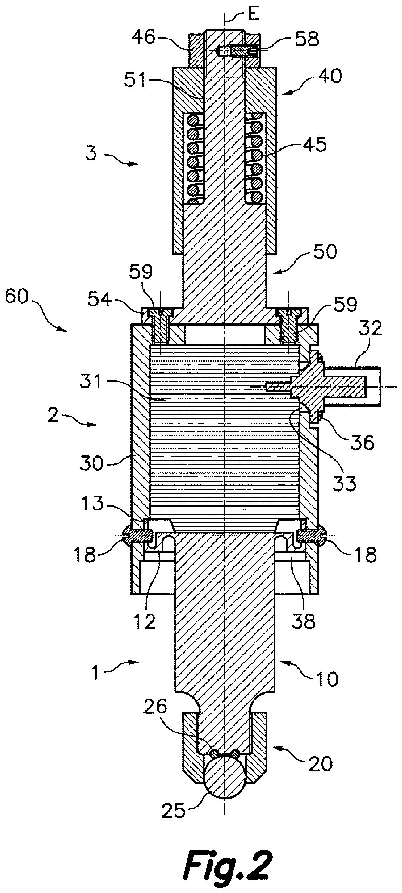

In relation to Figures 1 and 2, reference sign 60 generally designates an ultrasonic vibration-assisted ball burnishing tool according to an embodiment of the present invention. The burnishing tool 60 comprises a burnishing head 1, an ultrasonic vibration transmission unit 2, and a force regulating unit 3 which are connected in series to one another and are coaxial with a central axis E.

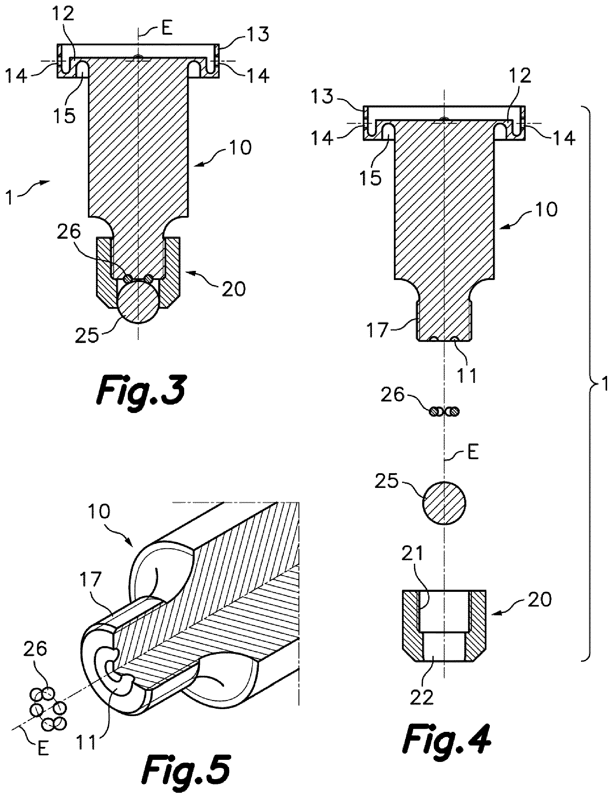

The burnishing head 1, shown separately in Figures 3, 4 and 5, includes a burnishing ball 25 supported on a head body 10. The burnishing ball 25 is retained at a distal end of the head body 10 by a retaining sleeve 20 fixed to the head body 10. The retaining sleeve 20 has an inner screw thread 21 coupled to an outer screw thread 16 formed in a portion adjacent to the distal end of the head body 10 and a cylindrical housing 17 in which the burnishing ball 25 is housed. The cylindrical housing 17 has a diameter adapted to the diameter of the burnishing ball 25 and a narrowed distal opening 22 for retaining the burnishing ball 25 in the cylindrical housing 17.

A plurality of support spheres 26 are interposed between the head body 10 and the burnishing ball 25 in contact with both. The distal end of the head body 10 has a surface perpendicular to the central axis E on which an annular groove 11 having a semicircular section with a radius equivalent to a radius of the support spheres 26 is formed, and the support spheres 26 are inserted in the annular groove 11. When the retaining sleeve 20 is coupled to the head body 10 retaining the burnishing ball 25 with the support spheres 26 in contact with the burnishing ball 25 and the head body 10, a portion of the burnishing ball 25 protrudes from the distal opening 22 of the retaining sleeve 20.

A circular connecting plate 12 and a cylindrical ring 13 attached to a perimetral edge of the connecting plate 12 are arranged at the proximal end of the head body 10. In the cylindrical ring 13, there is a plurality of fixing holes 14 arranged radially with respect to the central axis E. The fixing holes 14 of the head body 10 are inner screw threaded. The connecting plate 12 has thickness reductions produced by two or more annular grooves 15 formed on opposite sides of the connecting plate 12. The annular grooves 15 have different diameters and are concentric with the central axis E. These thickness reductions provide certain elasticity to the connecting plate 12.

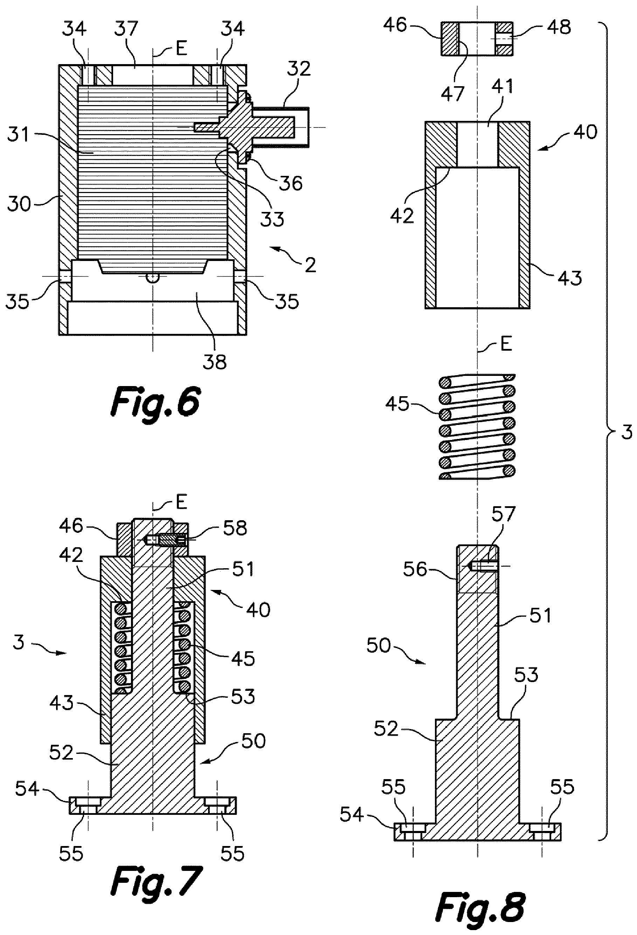

Figure 6 separately shows the ultrasonic vibration transmission unit 2, which includes one or more piezoelectric ceramic bodies 31 housed in a cylindrical casing 30 having a proximal end and a distal end. The proximal end is partially closed by a plate perpendicular to the central axis E and provided with a central opening 37 and in the proximal end there is a housing 38. In the plate partially closing the proximal end of the casing 30, there are fixing holes 34 parallel to the central axis E having inner screw threads. The fixing holes 34 are distributed around the central opening 37. The housing 38 located at the distal end is surrounded by a cylindrical wall in which radial fixing holes 35 are formed.

A connector 32 is externally fixed to the casing 30. The connector 32 is connected with the one or more piezoelectric ceramic bodies 31 through a passage opening 33. This connector 32 is configured for being connected to an external electric field generator through a connection cable (not shown). Thus, during operation, the external electric field generator causes the excitation of the one or more piezoelectric ceramic bodies 31 through the connector 32.

The force regulating unit 3, shown separately in Figures 7 and 8, includes a base support 40, an oscillating support 50 and an elastic element, such as a coil spring 45. The base support 40 is provided for being fixed to a tool holder element of a machine tool constituting a fixed base of the burnishing tool 60. The oscillating support 50 is guided such that it can slide along the central axis E with respect to the base support 40 and the elastic element is interposed under compression between the oscillating support 50 and the base support 40 for elastically applying a force to the oscillating support 50 in a direction opposite the base support 3.

The oscillating support 50 has a cylindrical portion 52 and a rod 51 coaxial with the central axis E, and there is a step 53 between the cylindrical portion 52 and the rod 51. The elastic element constituted by a coil spring 45 is arranged around the rod 51 and has a distal end which is supported on the step 53.

The base support 40 has an axial opening 41 around which there is a support surface 42 on which a proximal end of the coil spring 45 is supported. The rod 51 of the oscillating support 50 is slidingly inserted and guided through the axial opening 41. A stop element 46 having a dimension greater than the axial opening 41 is fixed in a portion of the rod 51 protruding from one side of the base support 40 opposite the coil spring 45. The oscillating support 50 can effect an axial back and forth movement with respect to the base support 40, and the stop element 46 limits this axial back and forth movement in the direction opposite the base support 40.

The portion of the rod 51 protruding from the base support 40 has an outer screw thread 56 and the stop element 46 has an axial hole 47 with an inner screw thread coupled to the outer screw thread 56 of the rod 51. Furthermore, the stop element 46 has a radial hole 48 which is aligned with a radial hole 57 of the rod 51 for installing a fixing screw 58 which is coupled to an inner screw thread of the radial hole 57 of the rod 51.

The base support 40 furthermore has a cylindrical tubular wall 43 surrounding the coil spring 45 and part of the cylindrical portion 52 of the oscillating support 50. The cylindrical tubular wall 43 is sized such that the cylindrical portion 52 is partially slidingly inserted and guided in the cylindrical tubular wall 43.

The oscillating support 50 has at the distal end opposite the base support 40 a perimetral flange 54 perpendicular to the central axis E. The perimetral flange 54 is provided with fixing holes 55 parallel to the central axis E and distributed around the cylindrical portion 52.

Referring again to Figure 2, in the assembled burnishing tool 60, the distal end of the casing 30 of the ultrasonic vibration transmission unit 2 is fixed to the proximal end of the head body 40 of the burnishing head 1 and the proximal end of the casing 30 of the ultrasonic vibration transmission unit 2 is fixed to a distal end of the oscillating support 50 of the force regulating unit 3.

To that end, the connecting plate 12 and the corresponding cylindrical ring 13 located at the proximal end of the head body 10 opposite the burnishing ball 25 are inserted in the housing 38 existing at the distal end of the casing 30 of the ultrasonic vibration transmission unit 2 and fixed thereto. The fixing holes 14 of the cylindrical ring 13 of the head body 10 are aligned with the corresponding fixing holes 35 of the casing 30 of the vibration transmission unit 20 and fixing screws 18 are installed through both and coupled to the inner screw thread of the fixing holes 14 of the cylindrical ring 13 of the head body 10. The one or more piezoelectric ceramic bodies 31 of the ultrasonic vibration transmission unit 2 are in contact with the proximal end of the head body 10.

Similarly, the perimetral flange 54 located at the distal end of the oscillating support 50 opposite the base support 40 is arranged against the proximal end of the casing 30 of the ultrasonic vibration transmission unit 2. The fixing holes 55 of the perimetral flange 54 of the oscillating support 50 are aligned with the corresponding fixing holes 34 of the casing 30 of the vibration transmission unit 20, and fixing screws 59 are installed through both and coupled to the inner screw threads of the fixing holes 59 of the casing 30 of the vibration transmission unit 20. A surface at the distal end of the oscillating support 50 of the force regulating unit 3 closes the central opening 37 of the casing 30 of the vibration transmission unit 20.

With this construction, the head body 10 and the burnishing ball 25 of the burnishing head 1, the casing 30 of the ultrasonic vibration transmission unit 2, and the base support 40, the coil spring 45 and the oscillating support 50 of the force regulating unit 3 are coaxial with the central axis E.

The one or more piezoelectric ceramic bodies 31 of the ultrasonic vibration transmission unit 2 have an ultrasonic resonance frequency of 35 to 45 kHz and transmit an ultrasonic percussion frequency of 20 kHz or higher to the burnishing ball 25.

Thus, the burnishing tool 60 is capable of performing a burnishing action by means of applying force combined with percussion at an ultrasonic percussion frequency exerted by the burnishing ball 25 of the burnishing head 1 on the workpiece to be burnished. The force, which is applied by the tool holder element of the machine tool, is transmitted to the burnishing head 1 by the coil spring 45 of the force regulating unit 3 and is therefore determined and regulated by the elastic constant and the degree of compression of the coil spring 45. Percussion at the ultrasonic percussion frequency is applied to the burnishing head 1 by the one or more piezoelectric ceramic bodies 31 of the ultrasonic vibration transmission unit 2.

The scope of the present invention is defined by the attached claims.

## Claims

1. An ultrasonic vibration-assisted ball burnishing tool, comprising:
a burnishing head (1) including a burnishing ball (25) supported on a head body (10); and
an ultrasonic vibration transmission unit (2) including one or more piezoelectric ceramic bodies (31),
wherein the head body (10) is fixed to said ultrasonic vibration transmission unit (2), and the ultrasonic vibration transmission unit (2), the head body (10) and said burnishing ball (25) are aligned along a central axis (E),
**characterized in that**:
said one or more piezoelectric ceramic bodies (31) of the vibration transmission unit (20) are housed in a casing (30) having a proximal end and a distal end;
the head body (10) has a proximal end fixed to said distal end of said casing (30) of the vibration transmission unit (20) and a distal end provided with an annular groove (11) formed on a surface perpendicular to said central axis (E) ; and
a plurality of support spheres (26) are interposed between said distal end of the head body (10) and the burnishing ball (25) and in contact with both, said support spheres (26) being inserted in said annular groove (11) of the head body (10).

2. The burnishing tool according to claim 1, further comprising a force regulating unit (3) including a base support (40) provided for being fixed to a tool holder element of a machine tool, an oscillating support (50) which is guided such that it can slide along the central axis (E) with respect to the base support (40), and an elastic element interposed under compression between said oscillating support (50) and said base support (40) for elastically applying a force to the oscillating support (50) in a direction opposite the base support (40), wherein the oscillating support (50) has a distal end opposite the base support (40) fixed to said proximal end of the casing (30) of the ultrasonic vibration transmission unit (2).

3. The burnishing tool according to claim 2, wherein the oscillating support (50) has a rod (51) coaxial with the central axis (E) and said elastic element is a coil spring (45) arranged around said rod (51).

4. The burnishing tool according to claim 3, wherein the oscillating support (50) has a cylindrical portion (52) and a step (53) between said cylindrical portion (52) and the rod (51) where a distal end of the coil spring (45) is supported.

5. The burnishing tool according to claim 4, wherein the base support (40) has an axial opening (41) in which the rod (51) is slidingly inserted and guided, and a support surface (42) around said axial opening (41) where a proximal end of the coil spring (45) is supported.

6. The burnishing tool according to claim 5, further comprising a stop element (46) fixed to a portion of the rod (51) protruding from one side of the base support (40) opposite the coil spring (45), wherein said stop element (45) has a dimension greater than said axial opening (41).

7. The burnishing tool according to claim 5 or 6, wherein the base support (40) has a cylindrical tubular wall (43) surrounding the coil spring (45) and part of the cylindrical portion (52) of the oscillating support (50), and wherein the cylindrical portion (52) is slidingly inserted and guided in said cylindrical tubular wall (43).

8. The burnishing tool according to claim 1, wherein the annular groove (11) of the head body (10) has a semicircular section with a radius equivalent to a radius of said support spheres (26).

9. The burnishing tool according to claim 1, wherein the burnishing ball (25) is retained at said distal end of the head body (10) by a retaining sleeve (20) fixed to the head body (10).

10. The burnishing tool according to claim 1, wherein the head body (10) has a circular connecting plate (12) having a perimetral edge attached to a cylindrical ring (13), a plurality of fixing holes (14) arranged radially with respect to the central axis (E) are formed in said cylindrical ring (13), and said fixing holes (14) are aligned with fixing holes (35) of the casing (30) of the vibration transmission unit (20) for installing fixing screws (18) therethrough.

11. The burnishing tool according to claim 10, wherein said connecting plate (12) has thickness reductions produced by two or more annular grooves (15) concentric with the central axis (E) formed on opposite sides of the connecting plate (12).

12. The burnishing tool according to claim 1, wherein the oscillating support (50) has a perimetral flange (54) at said distal end opposite the base support (4), and said perimetral flange (54) has fixing holes (55) parallel to the central axis (E) and aligned with fixing holes (34) of the casing (30) of the vibration transmission unit (20) for installing fixing screws (59) therethrough.

13. The burnishing tool according to claim 1, wherein the casing (30) of the vibration transmission unit (20) has fixed thereto an outer connector (32) which is connected with the one or more piezoelectric ceramic bodies (31) through a passage opening (33).

14. The burnishing tool according to any one of claims 1 to 13, wherein the one or more piezoelectric ceramic bodies (31) have an ultrasonic resonance frequency of 35 to 45 kHz and transmit an ultrasonic percussion frequency of 20 kHz or higher to the burnishing ball (25).
